# EUROPÄISCHE PATENTSCHRIFT

(11) **EP 1 147 699 B1**
(45) Veröffentlichungstag und Bekanntmachung des Hinweises auf die Patenterteilung: **09.11.2005**
(21) Anmeldenummer: 01108800.2
(22) Anmeldetag: 07.04.2001
(51) Int. Cl.: A01B 63/22

(54) **Anhebbarer Radzusammenbau für den Rahmen eines landwirtschaftlichen Geräts**
Liftable wheel unit for agricultural implement frame
Unité de roue levable pour bati de machine agricole

(30) Priorität: 17.04.2000 US 550979
(43) Veröffentlichungstag der Anmeldung: 24.10.2001
(73) Patentinhaber: DEERE & COMPANY, Moline, Illinois 61265-8098 (US)
(72) Erfinder: Payne, David Alan, Urbandale, IA 50322 (US); Mosdal, Brian Thomas, Ankeny, IA 50021 (US); Royer, Anthony Scott, Adel, IA 50003 (US); Parker, Paul David, Ankeny, IA 50021 (US); Noonan, James Thomas, Johnston, IA 50131 (US)
(74) Vertreter: Holst, Sönke

(56) Entgegenhaltungen:
- FR-A- 2 388 475
- US-A- 3 488 064
- US-A- 3 633 679
- US-A- 4 655 296

## Beschreibung

Die Erfindung betrifft einen anhebbaren Radzusammenbau für den Rahmen eines landwirtschaftlichen Geräts, insbesondere Bodenbearbeitungsgeräts, das zur Bewegung über den Erdboden eingerichtet ist, mit einer am Rahmen anbringbaren Befestigung, einer Parallelogrammaufhängung, die eine untere Verbindung und eine obere Verbindung umfasst, wobei die untere Verbindung und die obere Verbindung erste Enden haben, die an der Befestigung an vertikal versetzten Schwenkstellen schwenkbar angebracht sind, einer an zweiten, vertikal übereinander liegenden Enden der unteren Verbindung und oberen Verbindung schwenkbar angelenkten Radbefestigung, einem an der Radbefestigung angebrachten, im Eingriff mit dem Erdboden befindlichen Rad, einem an der unteren Verbindung befestigten, sich nach oben bis zu einem Endabschnitt oberhalb der oberen Verbindung erstreckenden Hubarm, und einem am Endabschnitt des Hubarms befestigten Antrieb, der betreibbar ist, untere Verbindung zwischen einer Transportposition und einer Feldarbeitsposition zu verschwenken.

Ein derartiger Radzusammenbau ist in der US 3 633 679 A beschrieben. Die Verbindungen der Parallelogrammaufhängung sind gerade und in einem relativ großen Abstand oberhalb des Rads angeordnet. Dadurch baut der Radzusammenbau sehr hoch und verursacht Platzprobleme, wenn äußere Flügelabschnitte zum Transport über den Rahmen gefaltet werden. Die Aufhängungen an den Flügelabschnitten können auch Platzprobleme bei Geräten verursachen, beispielsweise bei Geräten mit fünf Abschnitten, bei denen die inneren und äußeren Flügeln auf jeder Seite beim Transport in unmittelbare Nähe zueinander gefaltet werden.

Die US 3 488 064 A zeigt ein Bodenbearbeitungsgerät mit einem Rad, das an einer Parallelogrammaufhängung aufgehängt ist, deren obere Verbindung durch einen Hydraulikzylinder bewegt wird. Die untere Verbindung ist nach oben gekrümmt und befindet sich in Fahrtrichtung hinter der Drehachse des Rads. Auch dieser Radzusammenbau baut mit der Parallelogrammaufhängung recht hoch.

Die der Erfindung zugrunde liegende Aufgabe wird darin gesehen, einen verbesserten anhebbaren Radzusammenbau für ein Bodenbearbeitungsgerät bereitzustellen, der die oben erwähnten Nachteile nicht aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der erfindungsgemäße, anhebbare Radzusammenbau ist modular aufgebaut und kann an verschiedenen Stellen eines Rahmens eines Bodenbearbeitungsgeräts angebracht werden. Eine Parallelogrammaufhängung ist am Rahmen befestigt und trägt ein in der Regel nachlaufend gelenkt aufgehängtes Rad. Ein Hubarm, der aus Platten bestehen kann, die an beiden Seiten der unteren Verbindung der Parallelogrammaufhängung angeschraubt sind, erstreckt sich bis über die obere Verbindung nach oben bis zu einer Verbindungsstelle mit einem Antrieb. Der Antrieb kann ein Hydraulikzylinder oder ein andersartiger Antrieb - z. B. ein Elektromotor oder ein Druckluftzylinder - sein und bewegt den Hubarm, so dass das Rad zwischen einer Feldarbeitsposition und einer Transportposition verstellbar ist. Die Parallelogrammaufhängung stellt gute vertikale Hubeigenschaften mit einem minimalen Betrag an Raumbedarf in Längsrichtung bereit, was eine verminderte Rahmenlänge, verbesserten Fluss an Resten und universellere Werkzeuganbringungsmöglichkeiten zur vorteilhaften Folge hat. Der größte Teil der Belastung der Parallelogrammaufhängung einschließlich der durch das Gewicht des Geräts, der Wechselwirkung der Werkzeuge mit dem Boden bedingten und der durch den Hub des Antriebs erzeugten Belastung wird von der unteren Verbindung aufgenommen. Daher kann die obere Verbindung von leichterem und preiswerterem Aufbau sein. Dadurch, dass der Antrieb oberhalb der oberen Verbindung mit dem Hubarm gekoppelt ist, wird ein geeigneter Hebelarm für den Antrieb zum Bewegen des Rads erzielt, wobei die Hubelemente nicht wesentlich nach oben über den Rahmen hinausragen. Durch die vertikal verstellbaren Räder erübrigt sich, insbesondere bei Verwendung einer die volle vertikale Bewegung der Räder ermöglichenden Kupplung mit dem ziehenden Fahrzeug, die Verwendung von separaten Tiefeneinstellrädern. Es wird eine nach unten gekrümmte untere Verbindung verwendet, die das Rad nach oben abdeckt. Sie definiert auch den Lenkbereich des Rads. Dabei vergrößert sich der Abstand zwischen der Verbindung und dem Rad in Drehrichtung, so dass sich weder Schmutz noch Verunreinigungen zwischen dem Rad und der Verbindung ansammeln können.

Auf diese Weise erhält man ein Gerät mit einem kompakten Radzusammenbau, so dass Kollisionsprobleme mit anderen Elementen des Geräts nicht zu befürchten sind. Die Werkzeuge können an unterschiedlicheren Stellen angebracht werden. Schwenkwellen und zusammendrückbare Verbindungen sind nicht mehr nötig. Das Gewicht des Geräts ist reduziert und besser verteilt, und kürzere Rahmen können verwendet werden.

Ein Ende des Antriebs ist erfindungsgemäß mit dem Hubarm verbunden, der wiederum an der unteren Verbindung befestigt ist. Bevorzugt ist es, auch das zweite Ende des Antriebs an der den Radzusammenbau am Rahmen halternden Befestigung anzubringen, was über ein mit der Befestigung verbundenes, das zweite Ende des Antriebs halterndes Element geschehen kann. Dieses Element kann ebenfalls mit dem Rahmen verbunden sein, in der Regel mit einem hinter dem Rohr, an dem die den Radzusammenbau am Rahmen halternde Befestigung fixiert ist. Somit muss man nur die Befestigung vom Rahmen lösen, um den Radzusammenbau an einer anderen Stelle des Rahmens anzubringen.

Der Hubarm kann oberhalb der Verbindung mit dem Antrieb schwenkbar mit einer Spannungsverbindung in Form einer Stange oder dergleichen verbunden sein, die sich in der Vorwärtsbewegungsrichtung des Geräts bis zu einer Verbindung mit einem zweiten anhebbaren Radzusammenbau erstreckt. Der zweite Radzusammenbau kann entweder mit einer Parallelogrammaufhängung ähnlich der oben beschriebenen oder mit einer konventionellen Anordnung mit nur einem einzigen Arm ausgestattet sein. Die Spannungsverbindung und der Antrieb liegen nahe über dem Rahmen, um eine Kollision mit anderen, oberhalb des Rahmens angebrachten Komponenten zu vermeiden und das kompakte Zusammenfalten der Abschnitte des Bodenbearbeitungsgeräts zu erleichtern. Dieser Aufbau eliminiert schwere Kraftübertragungsverbindungen und ermöglicht ein nivelliertes Anheben. Die Eliminierung der Schwenkwelle und zugehörigen Schweißnähte verbessert die universelle Einsetzbarkeit des Geräts und der Rahmenkomponenten wesentlich, und derselbe anhebbare Radzusammenbau kann für verschiedene Geräte benutzt werden.

Die hintere Schwenklagerung der Parallelogrammaufhängung stellt einen geschützten Raum für eine Verbindungs-Stange bereit, die einen Umsetzer (Sensor) für die Radposition mit der unteren Verbindung koppelt. Die Verbindungs-Stange ist mit der unteren Verbindung an einer Stelle gekoppelt, die an der Oberseite des Bewegungskreisabschnitts oberhalb des Schwenkpunkts der unteren Verbindung angeordnet ist, um die lineare, in Vorwärtsrichtung verlaufende lineare Bewegung im Feldarbeitsbereich des anhebbaren Rads zu maximieren.

In den Zeichnungen ist ein nachfolgend näher beschriebenes Ausführungsbeispiel der Erfindung dargestellt. Es zeigt:
- Fig. 1: eine perspektivische Frontansicht eines teilweise auseinandergefalteten, mit mehreren Abschnitten ausgestatteten Rahmens eines Bodenbearbeitungsgeräts mit einer erfindungsgemäßen Hubeinrichtung für die Räder,
- Fig. 2: eine seitliche Ansicht der Hubeinrichtung der Räder, die am Flügelrahmen des Bodenbearbeitungsgeräts aus Figur 1 verwendet wird, wobei die Räder gegenüber dem Rahmen zum Transport abgesenkt sind,
- Fig. 3: eine Seitenansicht ähnlich der in Figur 2, die jedoch die Räder in einer gegenüber dem Rahmen zur Feldarbeit angehobenen Stellung zeigt,
- Fig. 4: eine Draufsicht auf die Hubeinrichtung der Räder der Figur 3, und
- Fig. 5: eine vergrößerte seitliche Ansicht des Befestigungsbereichs der Hubeinrichtung der Räder am vorderen Abschnitt des Rahmens, in der Einzelheiten der Anbringung des Umsetzerzusammenbaus gezeigt werden.

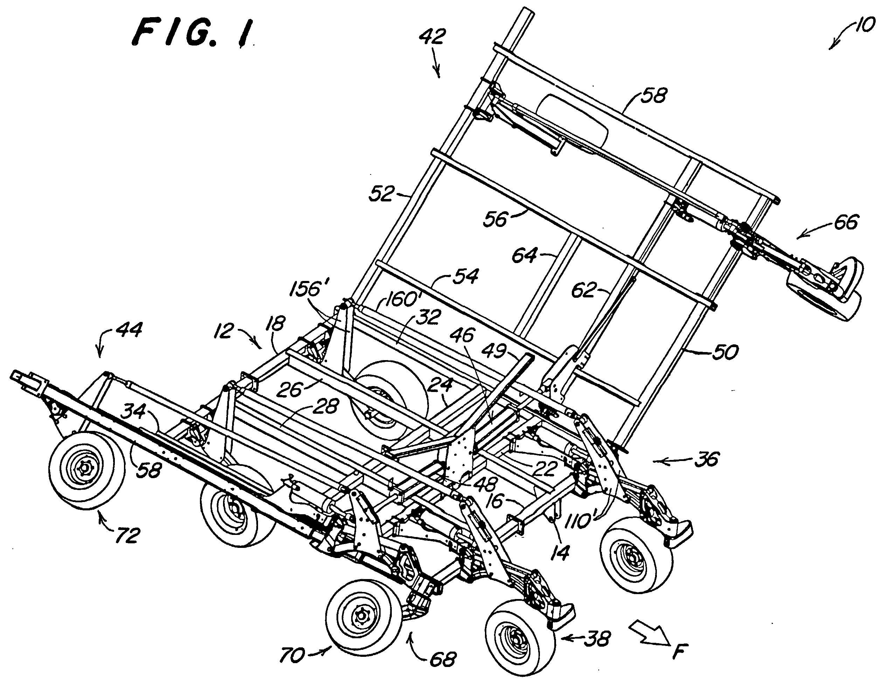

In Figur 1 ist ein aus mehreren Abschnitten bestehendes Bodenbearbeitungsgerät 10 dargestellt, wie ein Feldgrubber oder ein Meißelpflug, wobei die Bodenbearbeitungswerkzeuge entfernt wurden. Das dargestellte Bodenbearbeitungsgerät 10 umfasst einen mittleren Hauptrahmen 12 mit einer vorderen Kupplungsverbindungseinrichtung 14, die eingerichtet ist, mit einem ziehenden Fahrzeug durch eine (nicht gezeigte) Kupplung verbunden zu werden, um das Bodenbearbeitungsgerät 10 in der Vorwärtsrichtung F zu bewegen. Der Rahmen 12 umfasst vordere und hintere, sich quer erstreckende Rohre 16 und 18 und mittlere, sich quer erstreckende Rohre 22 und 24, die durch mittlere, sich von vorn nach hinten erstreckende Träger 26 und 28 und am äußeren Ende angeordnete Träger 32 und 34 verbunden sind. Linke und rechte anhebbare Radzusammenbauten 36 und 38 stützen den Rahmen 12 über dem Boden ab und bewegen den Rahmen 12 vertikal zwischen einer angehobenen Transportposition (dargestellt) und einer abgesenkten Feldbearbeitungsposition.

Das Bodenbearbeitungsgerät 10 umfasst linke und rechte Flügelabschnitte 42 und 44, die innere Enden haben, die an den äußeren Trägern 32 bzw. 34 angelenkt und durch Flügelfaltstrukturen 46 und 48, die mit dem Rohr 22 und dem jeweiligen Flügelabschnitt 42 und 44 verbunden sind, zwischen einer sich nach außen erstreckenden Feldarbeitsposition und einer eingefalteten Transportposition schwenkbar sind. Ein Anschlagszusammenbau 49 ist auch mit dem Rahmen 12 verbunden und unterstützt die Abstützung der Flügelabschnitte 42 und 44 in ihren voll eingefalteten Positionen.

Die Flügelabschnitte 42 und 44 sind im Wesentlichen Spiegelbilder voneinander und umfassen vordere und hintere Rohre 50 und 52, die durch sich von vorn nach hinten erstreckende Träger, wie sie mit 54, 56 und 58 gekennzeichnet sind, verbunden sind. Mittlere werkzeugtragende Rohre 62 und 64 erstrecken sich quer zwischen den Trägern 54 und 56, wie in Figur 1 dargestellt. Anhebbare Radzusammenbauten 66 und 68 für die Räder, die eingerichtet sind, sich im Wesentlichen im Einklang mit den anhebbaren Radzusammenbauten 36 und 38 zu bewegen, um die Flügelabschnitte 42 und 44 mit dem Hauptrahmen 12 anzuheben und abzusenken, sind nahe den äußeren Enden der Flügelabschnitte 42 und 44 angebracht. Der Aufbau der anhebbaren Radzusammenbauten 36 und 38 ist im Wesentlichen ähnlich mit dem der anhebbaren Radzusammenbauten 66 und 68 mit der Ausnahme, dass der Versatzabstand oberhalb des Rahmens bei den sich von vorn nach hinten erstreckenden Verbindungsstrukturen 74 der Radzusammenbauten 66 und 68 größer ist, um die Faltstrukturen 46 und 48 darunter aufzunehmen. Daher wird im Folgenden nur der Radzusammenbau 68 detaillierter beschrieben.

Der anhebbare Radzusammenbau 68 umfasst einen vorderen, an einer Parallelogrammaufhängung befestigten Lenkradzusammenbau 70 und einen hinteren Schwenkradzusammenbau 72, die durch eine Verbindungsstruktur 74 zum synchronen Betrieb verbunden sind. Obwohl ein nur mit einer einzelnen Schwenklagerung versehener Schwenkradzusammenbau mit 72 gekennzeichnet ist, ist anzumerken, dass ein Zusammenbau des mit einer Parallelogrammaufhängung ausgestatteten Typs, der im Wesentlichen identisch mit dem mit 70 gekennzeichneten Lenkradzusammenbau ist, an Stelle des dargestellten Schwenkradzusammenbaus 72 verwendet werden kann. Der Schwenkhubradzusammenbau 72 mit einer einzigen Schwenklagerung ist weniger teuer und hat, wenn er wie unten beschrieben befestigt ist, Anheb- und Absenkeigenschaften, die denen des Lenkradzusammenbaus 70 angenähert sind, so dass der Rahmen 12 des Bodenbearbeitungsgeräts 10 in Wesentlichen von vorn nach hinten nivelliert bleibt, wenn die Radzusammenbauten sich gegenüber dem Rahmen 12 vertikal bewegen.

Der Lenkradzusammenbau 70 umfasst eine senkrechte, als Befestigung des Radzusammenbaus am Rahmen dienende Befestigungskonsole 80, die durch einen U-Bolzen 82 mit dem vorderen Rohr 50 verbunden ist. Die hinteren Enden sich von vorn nach hinten erstreckender oberer und unterer Verbindungen 86 und 88 sind an vertikal versetzten Stellen 90 und 92 unmittelbar vor der vorderen Fläche des Rohrs 50 schwenkbar mit der Konsole 80 verbunden. Die vorderen Enden der Verbindungen 86 und 88 sind an vertikal versetzten Stellen 96 und 98 am hinteren Ende eines als Radbefestigung dienenden Gusselements 100 angebracht. Das vordere Ende des Gusselements 100 umfasst ein Schwenklager 102, das einen Lenkarm 104 um eine senkrechte Achse schwenkbar haltert. Der Lenkarm 104 erstreckt sich vom Schwenklager 102 nach innen und verläuft nach hinten und unten gekrümmt an der Seite eines Rades 106 entlang zu einer Verbindung mit einer Nabe 108 des Rads 106.

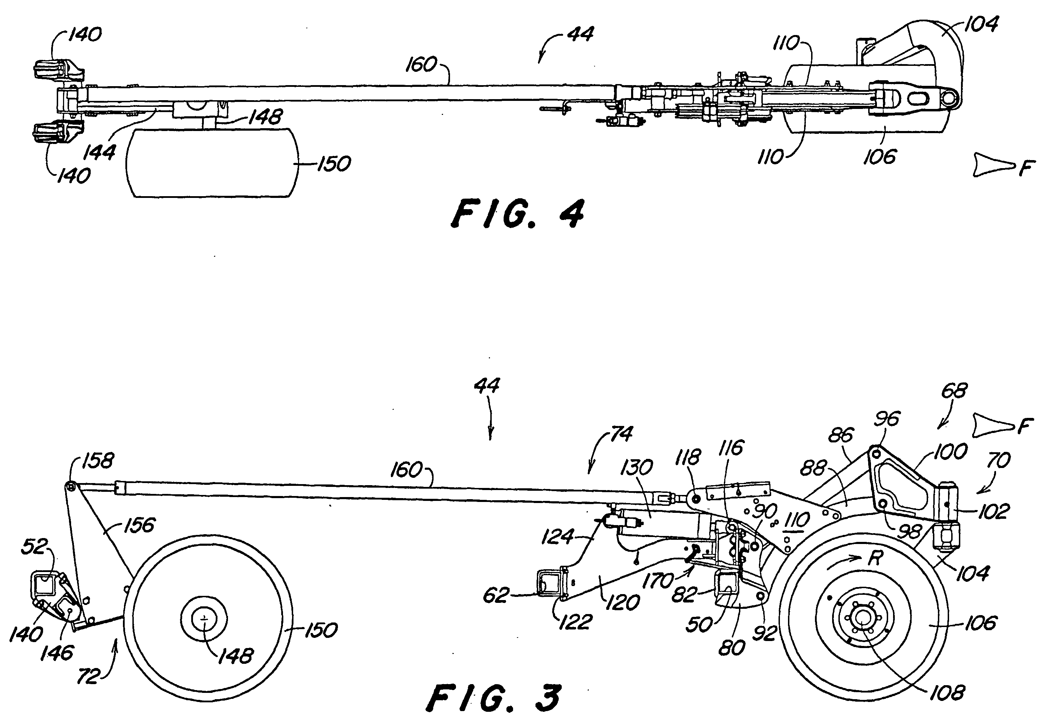

Wie am besten in Figur 3 erkennbar ist, ist die untere Verbindung 88 gekrümmt und öffnet sich oberhalb des Rades 106 nach unten, um die Lenkbewegungen des lenkbaren Rades 106 aufzunehmen, wenn das Bodenbearbeitungsgerät 10 in der abgesenkten Position ist. Der Raum zwischen dem äußeren Umfang des Rads 106 und der Unterseite der Verbindung 88 wächst in der Drehrichtung R des Rads 106 leicht an, so dass die Unterseite der Verbindung 88 nahe der Befestigungskonsole 80 Schmutz und Verunreinigungen abkratzt, die sich bei nassen Bedingungen auf dem Rad 106 ansammeln können; der sich vergrößernde Raum vermeidet ein Verkeilen verbleibenden Materials zwischen dem Rad 106 und der Verbindung 88. Der anhebbare Radzusammenbau 68 ist derart dimensioniert, dass die primäre Belastung der Parallelogrammaufhängung durch die untere Verbindung 88 erfolgt, wobei die obere Verbindung 86 eine im Wesentlichen aufrechte Orientierung der Achse des lenkbaren Rads 106 aufrecht erhält.

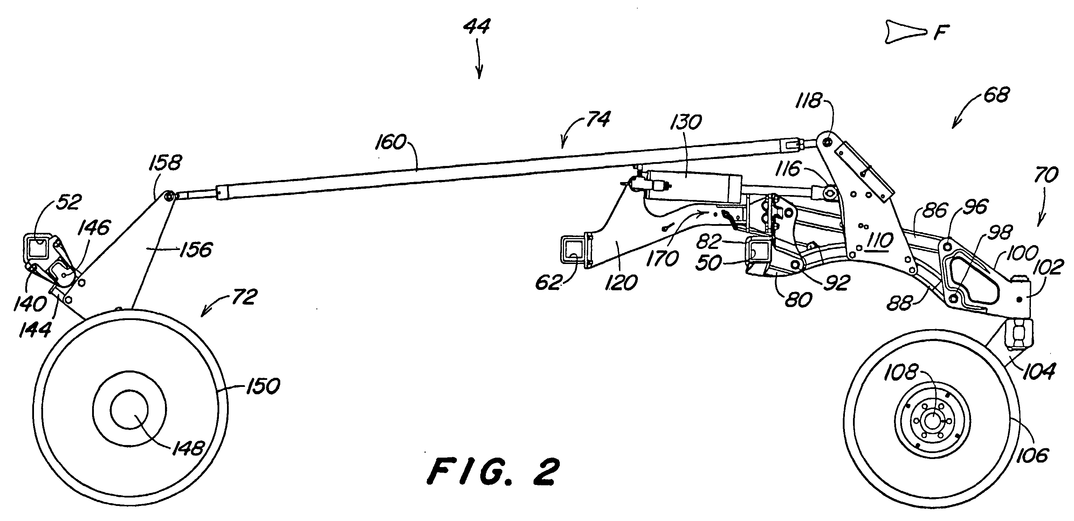

Ein Paar quer beabstandeter, als Hubarm für einen Hubzylinder 130 dienender Platten 110 ist an den mittleren Abschnitt der unteren Verbindung 88 angeschraubt und erstreckt sich an beiden Seiten der oberen Verbindung 86 nach oben. Die Platten 110 schwenken mit der unteren Verbindung 88 und erleichtern eine Bewegung der oberen Verbindung 86 zwischen den Platten 110, wenn der Lenkradzusammenbau 70 vertikal bewegt wird. Ein hinterer, mittlerer Abschnitt der Platten 110 ist geringfügig über der oberen Verbindung 86 mit einer kolbenstangenseitigen Befestigungsstelle 116 verbunden. Die Platten 110 erstrecken sich von ihrem mittleren Abschnitt noch weiter nach oben und hinten zu einer Befestigungsstelle 118 für die Verbindungsstruktur 74. Die Befestigungsstelle 118 ist direkt oberhalb der kolbenstangenseitigen Befestigungsstelle 116 angeordnet, wenn der anhebbare Radzusammenbau 68 in der Transportposition ist (Figur 1 und 2) und hinter der Befestigungsstelle 116, wenn der anhebbare Radzusammenbau 68 in der in Figur 3 gezeigten Feldbearbeitungsposition ist.

Der obere Abschnitt der Konsole 80 ist mit einer zweiten Konsole 120 verbunden, die als Element zur Halterung eines als Antrieb dienenden Hubzylinders 130 vorgesehen ist und sich über dem Rohr 50 nach hinten und dann nach hinten und unten zu einer Verbindung mit der vorderen Fläche des Rohrs 62 erstreckt, an dem sie mittels einer U-Bolzen-Konsole 122 befestigt ist. Ein als Verbindungselement dienender Zylinderbefestigungsabschnitt 124 erstreckt sich von einem hinteren Abschnitt der Konsole 120 nach oben und trägt das kolbenraumseitige Ende des Hubzylinders 130. Das kolbenstangenseitige Ende des Hubzylinders 130 ist mit der kolbenstangenseitigen Befestigungsstelle 116 verbunden. Ein Ausstrecken des Hubzylinders 130 (Figur 2) schwenkt die untere Verbindung 88 um die Stelle 92 nach unten, während ein Einziehen des Hubzylinders 130 (Figur 3) die untere Verbindung 88 nach oben schwenkt. Wie anhand der Figuren 2 und 3 erkennbar ist, erstreckt sich der Hubzylinder 130 parallel zu dem Rahmenabschnitt, an dem er angebracht ist, und ist demgegenüber nur leicht versetzt, sowohl in den dargestellten Extrempositionen als auch in den Zwischenpositionen, um einen sehr kompakten Aufbau bereitzustellen. Durch die Anbringung des Hubzylinders 130 an der unteren Verbindung 88 durch Platten 110 ist der notwendige Versatz für den das Drehmoment bereitstellenden Arm bereitgestellt, ohne die kolbenstangenseitige Befestigungsstelle 116 wesentlich über die obere Verbindung 86 anzuheben. Außerdem ist der Versatz der Befestigungsstelle 118 der Verbindungsstruktur 74 gegenüber dem Rahmen nach oben minimiert und die gekrümmte Ausführung der hinteren Kanten der Platten 110 stellt eine kompakte Konfiguration der Platten 110, des Hubzylinders 130 und der Verbindungsstruktur 74 in der Feldarbeitsposition (Figur 3) bereit.

Der hintere Radzusammenbau 72 umfasst eine Konsole 140, die mit dem hinteren Rohr 52 verbunden ist. Die Konsole 140 haltert einen Radarm 144 um einen Schwenkpunkt an der Stelle 146 schwenkbar, die unterhalb und vor der vorderen Fläche des Rohrs 52 angeordnet ist. Der Radarm 144 erstreckt sich nach unten und vorn (Figur 2) zu einer Nabe 148, die ein Hinterrad 150 um eine quer verlaufende Achse drehbar haltert. Ein Paar als Radverbindung mit dem Lenkradzusammenbau 70 dienender Platten 156 sind an den Seiten des Radarms 144 angeschraubt und erstrecken sich nach vorn und oben (Figur 2) zu einem oberen Ende 158, das oberhalb des und vor dem Rohr 52 und im Wesentlichen in selben Abstand oberhalb des entsprechenden Rahmens wie die Befestigungsstelle 118 an den Platten 110 angeordnet ist. Eine Spannungsverbindung 160 mit einstellbarer Länge erstreckt sich zwischen der Befestigungsstelle 118 und dem oberen Ende 158 und hält die Bewegung der anhebbaren Radstrukturen 70 und 72 im Wesentlichen im Einklang. Sowohl in den Extrempositionen als auch in jedem Punkt dazwischen liegt die Spannungsverbindung 160 nahe über dem Hubzylinder 130 und ist nur einen kurzen Abstand oberhalb des Rahmens versetzt angeordnet. Die Spannungsverbindung 160' (Figur 1) des Rahmens 12 ist oberhalb des Rahmens 12 durch Platten 110' und 116' versetzt, die geringfügig höher sind als die entsprechenden Platten 110 und 116 an den Flügelabschnitten 42, 44, um die nötige Freiheit für die Flügelfaltstrukturen 46 und 48 bereitzustellen.

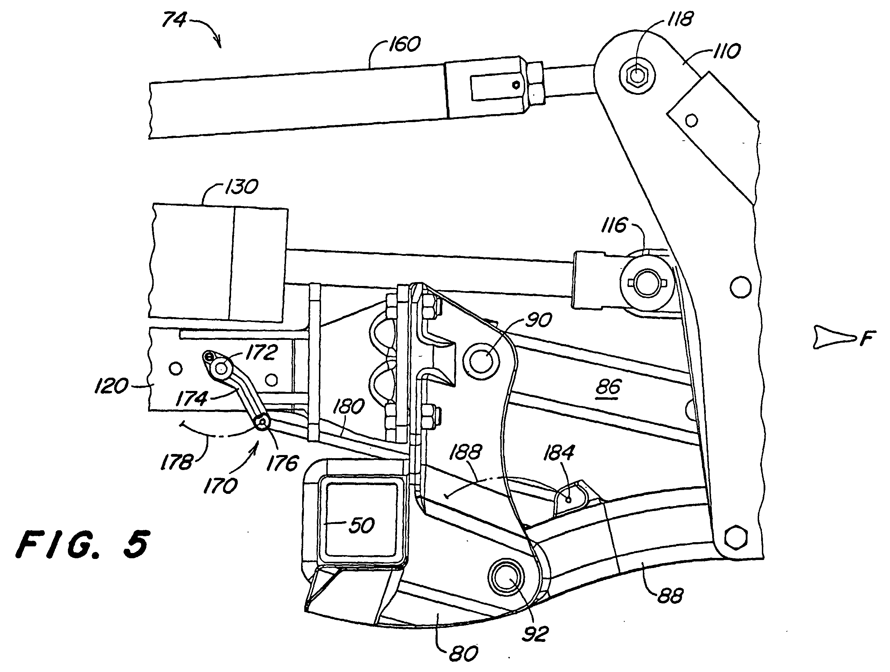

Ein Umsetzerzusammenbau 170 (Figur 5) ist zwischen der zweiten Konsole 120 und der unteren Verbindung 88 angeordnet, um eine Rückkopplung für einen automatischen Tiefensteuermechanismus bereitzustellen, der im Wesentlichen von dem Typ sein kann, der in der US 5 957 218 A offenbart ist. Der Umsetzerzusammenbau 170 umfasst ein Drehpotentiometer 172, das einen Arm 174 mit einem äußeren Ende 176 hat, der über einen mit 178 gekennzeichneten Bogen bewegbar ist. Das äußere Ende 176 ist durch eine Verbindungsstange 180 an einer Schwenklagerung bei 184 mit der unteren Verbindung 88 verbunden, wobei die Schwenklagerung 184 gegenüber der Schwenkachse an der Stelle 92 leicht nach vorn versetzt und oberhalb der Schwenkachse an der Stelle 92 angeordnet ist. Die Verbindungstange 180 erstreckt sich zum Schutz zwischen gegenüberliegenden Seiten der Konsole 80. Der Schwenkpunkt bei 184 bewegt sich über einen Bogen 188, wenn die untere Verbindung 88 von der (dargestellten) Transportposition in der Gegenuhrzeigerrichtung in die voll angehobene Position verschwenkt. Die Punkte 176 und 184 sind derart angeordnet, dass die Bögen 178 und 188 im Wesentlichen an mittleren, über der Mitte liegenden Positionen zentriert sind, um die Bewegung des Umsetzers in den Betriebspositionen während der Feldbetriebsarbeiten zu maximieren und zu linearisieren. Die oben beschriebene Konfiguration schützt auch den Umsetzerzusammenbau 170, da die Bauelemente des Umsetzers in kurzem Abstand von Hauptkomponenten des Bodenbearbeitungsgeräts 10 umgeben, aber davon versetzt sind. Das Potentiometer 172 stellt dem Tiefensteuerungsmechanismus ein Radpositionssignal bereit, so dass die Radposition und die Eindringtiefe der Werkzeuge ausgewählt und automatisch aufrechterhalten werden kann. Wenn eine unabhängige Steuerung von Vorder- und Hinterrädern gewünscht wird, können der Radzusammenbau 72 und die Verbindung 74 mit einem im Wesentlichen mit dem Radzusammenbau 70 identischen Radzusammenbau ersetzt und einzeln durch die Steuerung gesteuert werden. Die Befestigungskonfiguration für den Radzusammenbau 70 stellt eine Einsetzbarkeit des anhebbaren Radzusammenbaus an unterschiedlichen Stellen des Rahmens bereit, um die gewünschten Werkzeugabstände an den Rohren zu ermöglichen.

## Patentansprüche

1. Anhebbarer Radzusammenbau (36, 38, 66, 68) für den Rahmen (12, 42, 44) eines landwirtschaftlichen Geräts, insbesondere Bodenbearbeitungsgeräts (12), das zur Bewegung über den Erdboden eingerichtet ist, mit einer am Rahmen (12, 42, 44) anbringbaren Befestigung (80), einer Parallelogrammaufhängung, die eine untere Verbindung (88) und eine obere Verbindung (86) umfasst, wobei die untere Verbindung (88) und die obere Verbindung (86) erste Enden haben, die an der Befestigung (80) an vertikal versetzten Schwenkstellen schwenkbar angebracht sind, einer an zweiten, vertikal übereinander liegenden Enden der unteren Verbindung (88) und oberen Verbindung (86) schwenkbar angelenkten Radbefestigung (100), einem an der Radbefestigung (100) angebrachten, im Eingriff mit dem Erdboden befindlichen Rad (106), einem an der unteren Verbindung (88) befestigten, sich nach oben bis zu einem Endabschnitt oberhalb der oberen Verbindung (86) erstreckenden Hubarm (110), und einem am Endabschnitt des Hubarms (110) befestigten Antrieb (130), der betreibbar ist, die untere Verbindung (88) zwischen einer Transportposition und einer Feldarbeitsposition zu verschwenken, **dadurch gekennzeichnet, dass** die untere Verbindung (88) gekrümmt ist und sich von der oberen Verbindung nach unten öffnet und somit einen das Rad (106) aufnehmenden Raum unterhalb der Parallelogrammaufhängung definiert, und dass der das Rad (106) aufnehmende Raum in einem dem Umkreis des Rads (106) entsprechend gekrümmten Bogen gekrümmt und gegenüber dem Rad (106) versetzt ist, wobei sich der Abstand zwischen dem Rad (106) und der Verbindung (88) in Drehrichtung des Rads (106) vergrößert, um zu verhindern, dass sich Schmutz und Verunreinigungen zwischen dem Rad (106) und der Verbindung (88) ansammeln.

2. Radzusammenbau nach Anspruch 1, wobei sich der Antrieb (130) zwischen dem Endabschnitt und einem mit der Befestigung (80) verbundenen Element (120) erstreckt.

3. Radzusammenbau nach einem der vorhergehenden Ansprüche, wobei ein in Vorwärtsbewegungsrichtung gegenüber dem Rad (106) versetztes, zweites Rad (150) vertikal schwenkbar am Rahmen (12, 42, 44) befestigt ist, und sich eine Radverbindung (156) vom zweiten Rad (150) nach oben erstreckt und mit dem zweiten Rad (150) schwenkbar ist, und eine sich von vorn nach hinten erstreckende Spannungsverbindung (160) die Radverbindung (156) und den Hubarm (110) verbindet.

4. Radzusammenbau nach Anspruch 3, wobei eine Parallelogrammaufhängung das zweite Rad (150) mit dem Rahmen (12, 42, 44) verbindet.

5. Radzusammenbau nach Anspruch 4, wobei ein einzelner Radarm (156) schwenkbar mit dem Rahmen (12, 42, 44) verbunden ist und das zweite Rad (150) um eine quer zur Vorwärtsbewegungsrichtung verlaufende Achse schwenkbar haltert.

6. Radzusammenbau nach einem der Ansprüche 3 bis 5, wobei die Spannungsverbindung (160) und der Antrieb (130) über einen Betriebsbereich im Wesentlichen zueinander parallel verbleiben.

7. Radzusammenbau nach einem der Ansprüche 4 bis 6, wobei die Befestigung (80) eine sich vom Rahmen nach oben erstreckende Konsole (120) und ein Verbindungselement (124) mit einem vorderen, an der Konsole (120) befestigten Ende sowie einem hinteren, mit dem Antrieb (130) verbundenen Ende umfasst, wobei der Antrieb (130) in im Wesentlichen paralleler Beziehung zum Rahmen (12, 42, 44) direkt über dem Rahmen (12, 42, 44) und unterhalb des oberen Endabschnitts des Hubarms (110) gehalten wird.

8. Radzusammenbau nach einem der Ansprüche 1 bis 7, wobei der Antrieb (130) beim Zusammenziehen und Ausstrecken im Wesentlichen horizontal verbleibt.

9. Radzusammenbau nach einem der Ansprüche 1 bis 8, wobei ein Umsetzerzusammenbau (170) zwischen dem Rahmen (12, 42, 44) und der unteren Verbindung (88) angeordnet ist, um eine Information über die Position des Rads (106) gegenüber dem Rahmen (12, 42, 44) zu erzeugen, wobei eine Verbindung (180) mit der unteren Verbindung (88) um einen Bogen (188) drehbar verbunden ist, dessen Mitte an der Schwenkstelle der unteren Verbindung (88) liegt, um die Bewegung des Umsetzers (172) zu maximieren und zu linearisieren und einen Schutz für den Umsetzer (172) bereitzustellen.

## Claims

1. Liftable wheel unit (36, 38, 66, 68) for the frame (12, 42, 44) of an agricultural implement, in particular soil cultivation implement (12), which is equipped for movement over the ground, having an attachment (80) which can be mounted on the frame (12, 42, 44), having a parallelogram suspension, which comprises a lower connection (88) and an upper connection (86), the lower connection (88) and the upper connection (86) having first ends which are mounted pivotably on the attachment (80) at vertically offset pivot positions, having a wheel attachment (100) which is pivotably articulated on second ends, situated vertically one above the other, of the lower connection (88) and upper connection (86), having a wheel (106) which is mounted on the wheel attachment (100) and situated in engagement with the ground, having a lifting arm (110) which is attached to the lower connection (88) and extends upwardly to an end portion above the upper connection (86), and having a drive (130) which is attached to an end portion of the lifting arm (110) and is actuatable for pivoting the lower connection (88) between a transporting position and a field operating position, **characterised in that** the lower connection (88) is curved and opens downwardly from the upper connection and thus defines a space below the parallelogram suspension which receives the wheel (106), and **in that** the space which receives the wheel (106) is curved in a curved arc which corresponds to the periphery of the wheel (106) and is offset relative to the wheel (106), the spacing between the wheel (106) and the connection (88) enlarging in the direction of rotation of the wheel (106), in order to prevent dirt and debris collecting between the wheel (106) and the connection (88).

2. Wheel unit according to claim 1, the drive (130) extending between the end portion and a member (120) connected to the attachment (80).

3. Wheel unit according to one of the preceding claims, a second wheel (150), which is offset in the forward movement direction relative to the wheel (106), being attached vertically pivotably on the frame (12, 42, 44), and a wheel connection (156) extending upwardly from the second wheel (150) and being pivotable with the second wheel (150), and a tension connection (160), which extends from front to rear, connecting the wheel connection (156) and the lifting arm (110).

4. Wheel unit according to claim 3, a parallelogram suspension connecting the second wheel (150) to the frame (12, 42, 44).

5. Wheel unit according to claim 4, a single wheel arm (156) being connected pivotably to the frame (12, 42, 44) and mounting the second wheel (150) pivotably about an axis which extends transversely relative to the forward movement direction.

6. Wheel unit according to one of the claims 3 to 5, the tension connection (160) and the drive (130) remaining substantially parallel to each other over an operating range.

7. Wheel unit according to one of the claims 4 to 6, the attachment (80) comprising a console (120) which extends upwardly from the frame, and a connecting member (124) having a front end, which is attached to the console (120), and a rear end, which is connected to the drive (130), the drive (130) being retained in a substantially parallel relationship relative to the frame (12, 42, 44) directly above the frame (12, 42, 44) and below the upper end portion of the lifting arm (110).

8. Wheel unit according to one of the claims 1 to 7, the drive (130) remaining substantially horizontal during retraction and extension.

9. Wheel unit according to one of the claims 1 to 8, a transponder unit (170) being disposed between the frame (12, 42, 44) and the lower connection (88), in order to produce information relating to the position of the wheel (106) relative to the frame (12, 42, 44), a connection (180) being connected to the lower connection (88) rotatably about an arc (188), the centre of which is situated at the pivot position of the lower connection (88), in order to maximise and to linearise the movement of the transponder (172) and to provide protection for the transponder (172).

## Revendications

1. Ensemble de roues relevable (36, 38, 66, 68) pour le bâti (12, 42, 44) d'une machine agricole, en particulier une machine de travail du sol (12), qui est conçue pour se déplacer sur le sol, comportant une fixation (80) destinée à être fixée contre le bâti (12, 42, 44), un parallélogramme de suspension, qui comporte une attache inférieure (88) et une attache supérieure (86), l'attache inférieure (88) et l'attache supérieure (86) ayant des premières extrémités qui sont montées pivotantes sur la fixation (80) au niveau de points de pivotement écartés verticalement, une fixation pour roue (100), articulée de manière pivotante contre des deuxièmes extrémités, superposées dans le sens vertical, de l'attache inférieure (88) et de l'attache supérieure (86), une roue (106) en contact avec le sol, montée contre la fixation pour roue (100), un bras de levage (110) fixé contre l'attache inférieure (88) et s'étendant vers le haut jusqu'à une zone d'extrémité au-dessus de l'attache supérieure (86), et un système de transmission (130), qui est fixé contre la zone d'extrémité du bras de levage (110) et qui peut être actionné pour faire pivoter l'attache inférieure (88) entre la position de transport et une position de travail sur le champ, **caractérisé en ce que** l'attache inférieure (88) est cintrée et s'ouvre vers le bas à partir de l'attache supérieure (86) et délimite ainsi, en dessous du parallélogramme de suspension, un espace recevant la roue (106), et **en ce que** l'espace recevant la roue (106) est incurvé avec une courbure correspondant au contour de la roue (106), la distance entre la roue (106) et l'attache inférieure (88) s'agrandissant dans le sens de rotation de la roue (16) en vue d'empêcher que des saletés et impuretés puissent s'accumuler entre la roue (106) et l'attache inférieure (88).

2. Ensemble de roues selon la revendication 1, dans lequel le système de transmission (130) s'étend entre la zone d'extrémité et un élément (120) relié à la fixation (80).

3. Ensemble de roues selon l'une quelconque des revendications précédentes, dans lequel une deuxième roue (150), décalée par rapport à la roue (106) dans le sens du déplacement vers l'avant, est fixée verticalement pivotante contre le bâti (12, 42, 44), et une attache de roue (156) s'étend à partir de la deuxième roue (150) vers le haut et est montée pivotante avec la deuxième roue (150), et une liaison sous tension (160), qui s'étend de l'avant vers l'arrière en reliant l'attache de roue (156) avec le bras de levage (110).

4. Ensemble de roues selon la revendication 3, dans lequel un parallélogramme de suspension relie la deuxième roue (150) avec le bâti (12, 42, 44).

5. Ensemble de roues selon la revendication 4, dans lequel un seul bras de roue (156) est relié de manière pivotante avec le bâti (12, 42, 44) et la deuxième roue (150) est maintenue pivotante autour d'un axe orienté transversalement au sens de déplacement vers l'avant.

6. Ensemble de roues selon l'une quelconque des revendications 3 à 5, dans lequel la liaison sous tension (160) et le mécanisme de transmission (130) restent sensiblement parallèles l'un à l'autre sur une zone de service.

7. Ensemble de roues selon l'une quelconque des revendications 4 à 6, dans lequel la fixation (80) comporte une console (120) qui s'étend vers le haut à partir du bâti, et un élément de liaison (124) avec une extrémité avant solidaire de la console (120) et une extrémité arrière reliée au mécanisme de transmission (130), le mécanisme de transmission (130) étant maintenu sensiblement parallèlement par rapport au bâti (12, 42, 44), directement au-dessus du bâti (12, 42, 44) et en dessous de la zone d'extrémité supérieure du bras de levage (110).

8. Ensemble de roues selon l'une quelconque des revendications 1 à 7, dans lequel le mécanisme de transmission (130) reste sensiblement horizontal au moment de la rétraction et de l'extraction.

9. Ensemble de roues selon l'une quelconque des revendications 1 à 8, dans lequel un système de transpondeur (170) est agencé entre le bâti (12, 42, 44) et l'attache inférieure (88) pour générer une information sur la position de la roue (106) par rapport au bâti (12, 42, 44), une attache (180) étant assemblée avec l'attache inférieure (88) de manière rotative autour d'un arc (188), dont le centre est situé sur le point de pivotement de l'attache inférieure (88) pour maximiser et linéariser le mouvement du transpondeur (172) et constituer une protection pour le transpondeur (172).
